# EUROPÄISCHE PATENTANMELDUNG

(11) **EP 3 591 730 A1**
(43) Veröffentlichungstag der Anmeldung: **08.01.2020**
(21) Anmeldenummer: 18181724.8
(22) Anmeldetag: 04.07.2018
(51) Int. Cl.: H01M 2/02, H01M 2/20, H01M 2/30

(54) **POUCHZELLE UND STACK**

(71) Anmelder: Hilti Aktiengesellschaft, 9494 Schaan (LI)
(72) Erfinder: Lepiorz, Matthias, 09112 Chemnitz (DE); Martiny, Nora, 82211 Herrsching-Breitbrunn (DE); Ziegler, Bernd, 86830 Schabmünchen (DE); Stanger, Robert, 87600 Kaufbeuren (DE); Sax, Kathrin, 86937 Scheuring (DE); Ender, Moses, 9470 Buchs (CH); Hauser, Klaus, 86830 Schwabmünchen (DE)
(74) Vertreter: Hilti Aktiengesellschaft Corporate Intellectual Property

(57) **Zusammenfassung**

Pouchzelle mit einem Plus-Kontaktbereich und einem Minus-Kontaktbereich, über die die Pouchzelle elektrisch kontaktiert und so beladen und entladen werden kann, wobei die Pouchzelle flächig ausgebildet ist und eine Zelloberseite sowie eine der Zelloberseite gegenüberliegende Zellunterseite aufweist, wobei der Plus-Kontaktbereich ausschließlich auf der Zelloberseite und der Minus-Kontaktbereich ausschließlich auf der Zellunterseite, oder umgekehrt, befindlich ist.

## Beschreibung

Die vorliegende Erfindung betrifft eine Pouchzelle mit einem Plus-Kontaktbereich und einem Minus-Kontaktbereich, über die die Pouchzelle elektrisch kontaktiert und so beladen und entladen werden kann. Die Pouchzelle ist flächig ausgebildet und weist eine Zelloberseite sowie eine der Zelloberseite gegenüberliegende eine Zellunterseite aufweist. Vorzugsweise weist die Pouchzelle einen Lithium-Ionen-Akkumulator auf.

Pouchzellen der eingangs genannten Art sind grundsätzlich aus dem Stand der Technik bekannt.

Der vorliegenden Erfindung liegt die Aufgabe zugrunde, eine Pouchzelle bereitzustellen, die ein einfaches und sicheres Kontaktieren begünstigt.

Die Aufgabe wird dadurch gelöst, dass der Plus-Kontaktbereich ausschließlich auf der Zelloberseite und der Minus-Kontaktbereich ausschließlich auf der Zellunterseite, oder umgekehrt, befindlich ist. Die Pouchzelle weist vorzugsweise einen umlaufenden Zellrandstreifen oder Randbereich auf, der frei von elektrischen Kontaktfahnen oder frei von jedweden elektrischen Kontaktierelementen ist.

Die Erfindung schließt die Erkenntnis ein, dass Pouchzellen des Standes der Technik im Massenproduktionsprozess schwierig zu handhaben sind, da ihre Kontaktfahnen typischerweise nahe beieinanderliegen und die Pouchzellen bei unachtsamer Handhabbarkeit kurzgeschlossen werden können. Weiterhin wurde erkannt, dass Pouchzellen aufgrund ihrer Bauform zur elektrischen Kontaktierung bisher nicht widerstandsgeschweißt werden können. Dies führt beim Massenproduktionsprozess von Akkupacks bzw. Stacks mit Pouchzellen zu einem hohen technischen und finanziellen Aufwand für automatisierte Anlagen, welche die elektrische Kontaktierung der einzelnen Pouchzellen durchführen. Der Stack kann auch als Stapel, Stoß oder Anhäufung bezeichnet werden.

In Abkehr dazu wird eine Pouchzelle geschaffen, deren Plus-Kontaktbereich ausschließlich auf der Zelloberseite und deren Minus-Kontaktbereich ausschließlich auf der Zellunterseite, oder umgekehrt, befindlich ist. Dadurch kann die erfindungsgemäße Pouchzelle in einem Massenproduktionsprozess vorteilhafterweise unbedenklich gehandhabt werden, d.h. etwaige Kurschlüsse zwischen Pouchzellen eines Stacks können vermieden werden.

Auf Basis der erfindungsgemäß bereitgestellten Pouchzelle kann ein Stack mit einer Mehrzahl von Pouchzellen bereitgestellt werden. Ein solcher Stack kann Teil eines Akkupacks zur Versorgung einer elektrischen Handwerkzeugmaschine sein. Demgemäß führt die Erfindung auch auf die Verwendung eines Stacks mit einer Mehrzahl erfindungsgemäßer Pouchzellen zur Versorgung einer elektrischen Handwerkzeugmaschine.

Diesbezüglich schließt die Erfindung die Erkenntnis ein, dass Akkupacks für elektrische Handwerkzeugmaschinen typischerweise ausschließlich aus zylindrisch geformten Lithium-Ionen-Zellen gefertigt sind. Mit zunehmender Leistungsanforderung von Handwerkzeugmaschinen steigen jedoch die erforderlichen Entladeströme, wodurch die Batteriepacks infolge höherer Verlustleistungen die maximale Zulässigkeit vor dem Entladen erreichen und thermisch bedingt abgeschaltet werden müssen. Die im Batteriepack verbleibende Restenergie steht Nutzern nicht - oder erst nach einer Abkühlphase - zur Verfügung.

Mit einem Stack aufweisend eine Mehrzahl erfindungsgemäß kontaktierter Pouchzellen, kann ein thermisch bedingtes Abschalten von Batteriepacks für elektrische Handwerkzeugmaschinen reduziert werden. Dies da statt konventioneller zylindrisch geformter Lithium-Ionen-Zellen nunmehr Pouchzellen eingesetzt werden können. Es wurde erkannt, dass Pouchzellen aufgrund ihres inneren elektrischen Aufbaus einen geringeren elektrischen Widerstand besitzen und somit bei vergleichsweise hohen Entladeleistungen weniger Verlustleistung aufweisen, wodurch Batteriepacks mit solchen Pouchzellen entweder länger oder mit höheren Leistungen betrieben werden können.

In einer besonders bevorzugten Ausgestaltung ist der Plus-Kontaktbereich als elektrisch-mechanisches Plus-Verbindungselement und/oder der Minus-Kontaktbereich als elektrisch-mechanisches Minus-Verbindungselement ausgebildet. Das Plus-Verbindungselement und/oder das Minus-Verbindungselement können jeweils flach und zum Kontaktieren mittels Verpressens oder Verschweißens ausgebildet sein. Ein Stack mit einer Mehrzahl von Pouchzellen kann demnach dadurch bereitgestellt werden, dass die vorzugsweise flächig ausgebildeten Kontaktbereiche benachbarter Pouchzellen aneinander anliegen. Durch Aufeinanderpressen der einzelnen Pouchzellen in einem Akkupackgehäuse kann eine Kontaktierung der Einzelzellen gewährleistet werden. Durch ein solches Aufeinanderpressen der Einzelzellen wird vorzugsweise eine reversible Verbindung zwischen den jeweiligen Kontaktbereichen der geschichteten Pouchzellen erreicht. In einem alternativen Ausführungsbeispiel können die geschichteten Pouchzellen auch irreversibel miteinander verbunden sein. Dies kann beispielsweise dadurch geschehen, dass vor einem Aufeinanderpressen der Pouchzellen eine leitende Beschichtung, die dann einen jeweiligen Kontaktbereich bildet, aufgetragen wird, wobei die leitende Beschichtung eine Klebe- oder Haftwirkung aufweist. In einer weiteren Ausgestaltung kann ein Verbindungselement beispielsweise durch einen verschweißfähigen und leitfähigen Kunststoff dargestellt werden, wobei ein Verschweißen beispielsweise mittels thermischem oder Ultraschallschweißen erfolgen kann.

In einer weiteren bevorzugten Ausgestaltung ist das Plus-Verbindungselement und/oder das Minus-Verbindungselement jeweils als Steckverbindungselement ausgebildet. Vorzugsweise sind das Plus-Verbindungselement und das Minus-Verbindungselement als Steckverbindungselemente komplementären Typs ausgestaltet. So kann beispielsweise das Plus-Verbindungselement als männliches Steckverbindungselement und das Minus-Verbindungselement als weibliches Steckverbindungselement, oder umgekehrt, ausgebildet sein. In einer besonders bevorzugten Ausgestaltung bilden das als Steckverbindungselement ausgebildete Plus-Verbindungselement und das als Steckverbindungselement ausgebildete Minus-Verbindungselement eine Steckverbindung im Sinne einer trapezförmigen Schlittenführung oder aber auch im beispielsweise im Sinne einer trapezförmigen Schwalbenschwanzführung. Es hat sich als vorteilhaft herausgestellt, wenn eine Steckrichtung der Steckverbindungselemente parallel zur Zelloberseite und zur Zellunterseite orientiert ist. Eine Steckverbindung zwischen Plus-Verbindungselement und Minus-Verbindungselement kann reversibel als auch irreversibel ausgebildet sein. Für eine irreversible Ausgestaltung kann ein Steckverbindungselement oder können beide Steckverbindungselemente beispielsweise über Widerhaken verfügen.

In einer weiteren bevorzugten Ausgestaltung sind das Plus-Verbindungselement und/oder das Minus-Verbindungselement jeweils als Schraubverbindungselemente ausgebildet. Vorzugsweise sind solche Schraubverbindungselemente vorzugsweise komplementären Typs. Mittels der Schraubverbindungselemente können einzelne Pouchzellen eines Stacks miteinander bzw. ineinander verschraubt werden. Auch eine solche Kontaktierung kann reversibel oder irreversibel ausgestaltet sein.

Es hat sich als vorteilhaft herausgestellt, wenn das oder die Schraubverbindungselemente lediglich abschnittsweise elektrisch leitfähig sind, derart, dass ein elektrisches Kontaktieren erst nach einem oder am Ende eines mechanischen Kontaktierens erfolgt. Mit anderen Worten kann vorgesehen sein, dass durch ineinander bzw. aneinander zu schraubende Zellen eine elektrische Kontaktierung erst erfolgt, wenn die Zellen vollständig aneinander bzw. ineinander verschraubt sind. Dies hat den Vorteil, dass Kurzschlüsse durch falsche Kontaktierungen im Massenproduktionsprozess grundsätzlich ausgeschlossen oder zumindest aber deutlich vermindert werden können.

Es hat sich als vorteilhaft herausgestellt, wenn die Pouchzelle außerhalb des Plus-Kontaktbereichs und/oder außerhalb des Minus-Kontaktbereichs elektrisch isoliert ist. In einer besonders bevorzugten Ausgestaltung ist die Zelloberseite und/oder die Zellunterseite im Wesentlichen flach ausgebildet. Eine Zelldicke ist vorzugsweise geringer als eine Zellbreite und/oder eine Zelltiefe.

Es hat sich als vorteilhaft herausgestellt, wenn sich die Verbindungselemente jeweils senkrecht zur flachen Zelloberseite und/oder senkrecht zur flachen Zellunterseite erstrecken. Die Verbindungselemente können über die flache Zelloberseite und/oder die flache Zellunterseite hinausragen. In einer besonders bevorzugten Ausgestaltung ist der Plus-Kontaktbereich und der Minus-Kontaktbereich über innerhalb der Pouchzelle verlaufende Schleifen oder elektrische Leitungen aus der Pouchzelle herausgeführt.

In allen hier beschriebenen Ausführungsbeispielen kann der Plus-Kontaktbereich und/oder der Minus-Kontaktbereich beispielsweise metallisch ausgebildet sein. Der Plus-Kontaktbereich und/oder der Minus-Kontaktbereich kann aus Aluminium bestehen oder Aluminium aufweisen. Der Minus-Kontaktbereich ist vorzugsweise als metallischer Minuspol ausgebildet. Ein metallischer Minuspol kann beispielsweise aus Nickel bestehen oder Nickel aufweisen. Eine solche Ausgestaltung ist alternativ oder zusätzlich für den Plus-Kontaktbereich möglich.

Die Erfindung wird ebenfalls gelöst durch einen Stack mit einer Mehrzahl von Pouchzellen der vorbeschriebenen Art, wobei die Pouchzellen über ihre jeweiligen Verbindungselemente elektrisch miteinander kontaktiert sind. Vorzugsweise ist eine solche Kontaktierung eine Reihenschaltung, wobei ein Plus-Kontaktbereich einer ersten Pouchzelle mit einem Minus-Kontaktbereich einer benachbarten Pouchzelle elektrisch kontaktiert ist. Ein solcher Stack kann durch die mit Bezug auf die Pouchzelle vorbeschriebenen Merkmale in entsprechender Weise weitergebildet sein.

Die Erfindung führt ebenfalls auf die Verwendung eines Stacks der vorbeschriebenen Art zur Versorgung einer elektrischen Handwerkzeugmaschine, wobei der Stack vorzugsweise in einem Akkupack der elektrischen Handwerkzeugmaschine angeordnet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein Pouchzelle des Standes der Technik;
- Fig. 2: ein erstes bevorzugtes Ausführungsbeispiel einer erfindungsgemäßen Pouchzelle;
- Fig. 3: ein bevorzugtes Ausführungsbeispiel eines erfindungsgemäßen Stacks;
- Fig. 4: Steckverbindungselemente eines zweiten bevorzugten Ausführungsbeispiels einer erfindungsgemäßen Pouchzelle;
- Fig. 5: zwei Pouchzellen des zweiten bevorzugten Ausführungsbeispiels in Gänze;
- Fig. 6: ein drittes bevorzugtes Ausführungsbeispiel einer erfindungsgemäßen Pouchzelle in Draufsicht;
- Fig. 7: das Ausführungsbeispiel der Fig. 6 in perspektivischer Darstellung; und
- Fig. 8: ein viertes bevorzugtes Ausführungsbeispiel einer erfindungsgemäßen Pouchzelle.

### Ausführungsbeispiele:

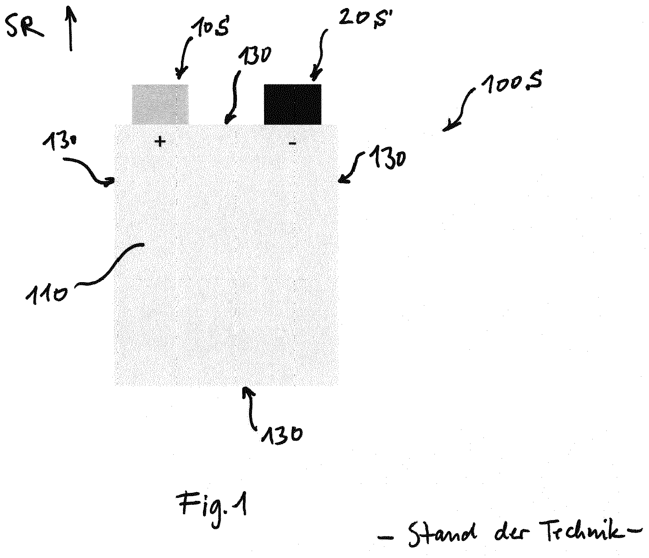

Eine Pouchzelle 100S des Standes der Technik ist in Fig. 1 dargestellt. Die Pouchzelle 100S weist einen Plus-Kontaktbereich 10 und einen Minus-Kontaktbereich 20 auf, über die die Pouchzelle 100S elektrisch kontaktiert und so geladen und entladen werden kann. Die Pouchzelle 100S ist flächig ausgebildet und weist eine Zelloberseite 110 und eine hier nicht gezeigte Zellunterseite auf, die der Zelloberseite 110 gegenüberliegt.

Wie der Fig. 1 entnommen werden kann, ist der Plus-Kontaktbereich 10S und der Minus-Kontaktbereich 20S jeweils als Kontaktfahne ausgebildet, die in seitlicher Richtung SR von der Pouchzelle 100S abstehen. Dabei weist die Pouchzelle 100S einen umlaufenden Zellrandstreifen 130 auf, an dem zumindest an einer Seite der Plus-Kontaktbereich 10S und der Minus-Kontaktbereich 20S befindlich ist.

Die in Fig. 1 gezeigte Pouchzelle 100S hat den bereits eingangs genannten Nachteil, dass sie aufgrund der vergleichsweise dicht beieinanderliegenden Kontaktfahnen (Plus-Kontaktbereich 10S und Minus-Kontaktbereich 20S) in einem Massenproduktionsprozess vergleichsweise schwierig zu handhaben, da - bei unachtsamer Handhabung - ein Kurzschluss der Pouchzelle 100S droht.

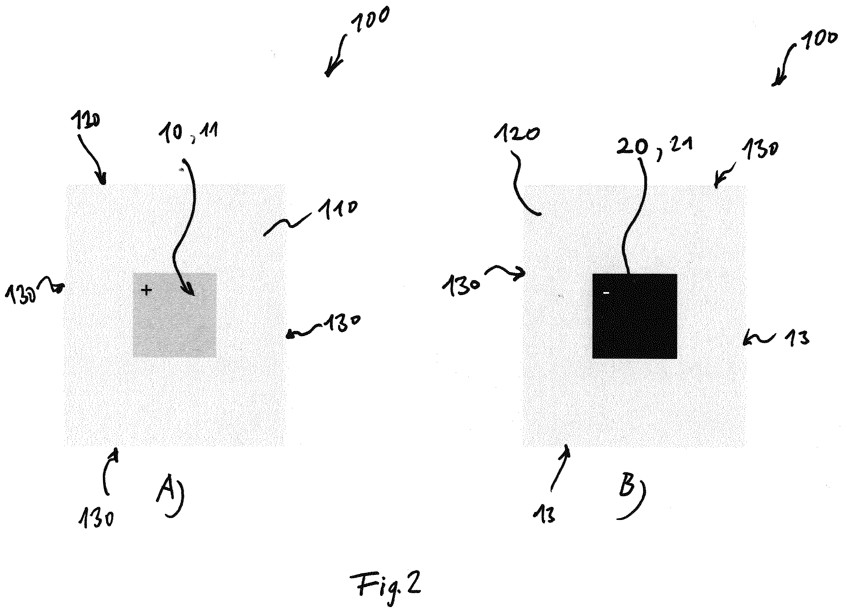

In Abkehr zu der Pouchzelle 100S des Standes der Technik zeigt Fig. 2 nunmehr eine erfindungsgemäße Pouchzelle 100. Dabei zeigt Fig. 2A die Oberseite und Fig. 2B die Unterseite der Pouchzelle.

Die Pouchzelle 100 der Fig. 2 weist einen Plus-Kontaktbereich 10 und einen Minus-Kontaktbereich 20 auf, über die die Pouchzelle 100 elektrisch kontaktiert und so beladen und entladen werden kann. Die Pouchzelle 100 ist flächig ausgebildet und weist eine Zelloberseite 110 auf (Fig. 2A). Die Pouchzelle 100 weist ebenfalls eine Zellunterseite 120 auf (Fig. 2B), die der Zelloberseite 110 gegenüberliegt.

Erfindungsgemäß ist vorgesehen, dass der Plus-Kontaktbereich 10 ausschließlich auf der Zelloberseite 110 und der Minus-Kontaktbereich 20 ausschließlich auf der Zellunterseite 120 befindlich ist.

Im ersten bevorzugten Ausführungsbeispiel der Fig. 2 ist gut zu erkennen, dass ein umlaufender Zellrandstreifen 130 frei von jedweden elektrischen Kontaktierelementen ist.

Im Ausführungsbeispiel der Fig. 2 ist der Plus-Kontaktbereich 10 als elektrisches Plus-Verbindungselement 11 und der Minus-Kontaktbereich 20 als elektrisches Minus-Verbindungselement 21 ausgebildet. Dabei sind das Plus-Verbindungselement 11 und das Minus-Verbindungselement 21 jeweils flach und hier beispielhaft quadratisch ausgebildet. Das Plus-Verbindungselement 11 und das Minus-Verbindungselement 21 dienen zum Kontaktieren der Pouchzelle 100 mittels Verpressens.

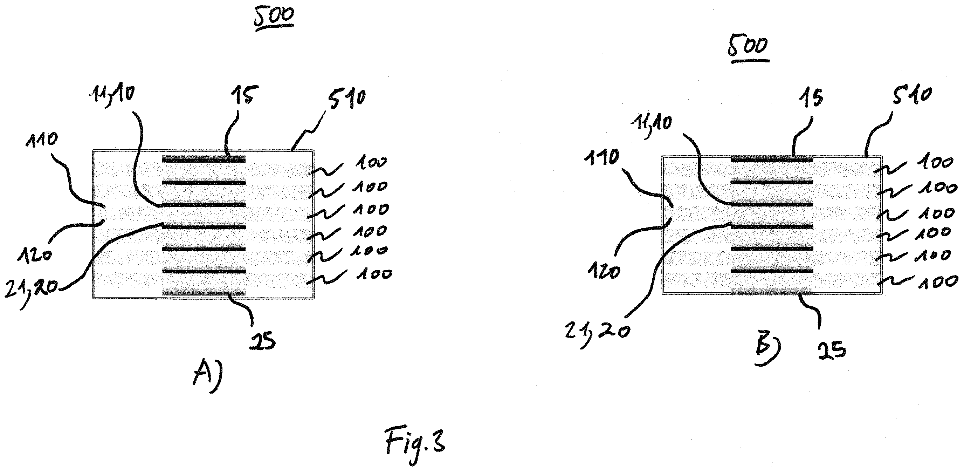

Ein Stack 500, der eine Mehrzahl verpresster Pouchzellen 100 aufweist, ist in Fig. 3 dargestellt. Es zeigen Fig. 3A und B verschiedene Ausgestaltungsvarianten eines Stacks 500 innerhalb eines Gehäuses 510.

Beiden Figuren 3A und B ist gemein, dass eine Mehrzahl geschichteter Pouchzellen 100 vorgesehen ist, hier beispielhaft sechs geschichtete Pouchzellen 100. Jede der Pouchzellen 100 weist eine Zelloberseite 110 mit darauf angeordnetem Plus-Kontaktbereich 10 und eine Zellunterseite 120 mit darauf angeordnetem Minus-Kontaktbereich 20 auf. Dabei stehen Plus-Kontaktbereich 10 einer ersten Pouchzelle 100 mit dem Minus-Kontaktbereich 20 einer benachbarten Pouchzelle in Verbindung. Mit anderen Worten sind die Pouchzellenstacks 500 Reihenschaltungen von Pouchzellen 100.

Auch in Fig. 3 ist gut zu erkennen, dass die jeweiligen Pouchzellen 100 lediglich auf ihrer Zelloberseite 110 bzw. Zellunterseite 120 elektrisch kontaktiert sind.

Die oberste Pouchzelle 100 im Stack weist zudem einen Plus-Stackanschluss 15 auf. Ein Minus-Stackanschluss 25 ist an der untersten Pouchzelle 100 im Stapel vorgesehen. Über den Plus-Stackanschluss 15 und den Minus-Stackanschluss 25 erfolgt eine elektrische Einbindung des Stacks 500 beispielsweise in einen hier nicht genauer dargestellten Akkupack für eine elektrische Handwerkzeugmaschine. Im Folgenden soll kurz auf die Unterschiede der Ausführungsbeispiele der Fig. 3A und B eingegangen werden. Fig. 3A zeigt ein Gehäuse 510 in einer geschlossenen Variante, das heißt der Plus-Stackanschluss 15 und der Minus-Stackanschluss 25 sind nicht Teil einer Oberfläche des Gehäuses 510. Eine elektrische Kontaktierung des Plus-Stackanschlusses 15 bzw. des Minus-Stackanschlusses 25 zur Umgebung erfolgt durch hier nicht weiter dargestellte elektrische Verbindungsleitungen.

Im Gegensatz dazu zeigt Fig. 3B den Stack 500 in einer offenen Variante des Gehäuses 510, das heißt der Plus-Stackanschluss 15 und der Minus-Stackanschluss 25 bilden einen Teil der Oberfläche des Gehäuses 510.

Die Gehäuse 510 der Fig. 3 können quaderförmig ausgebildet sein, vorzugsweise sind diese aber würfelförmig ausgebildet.

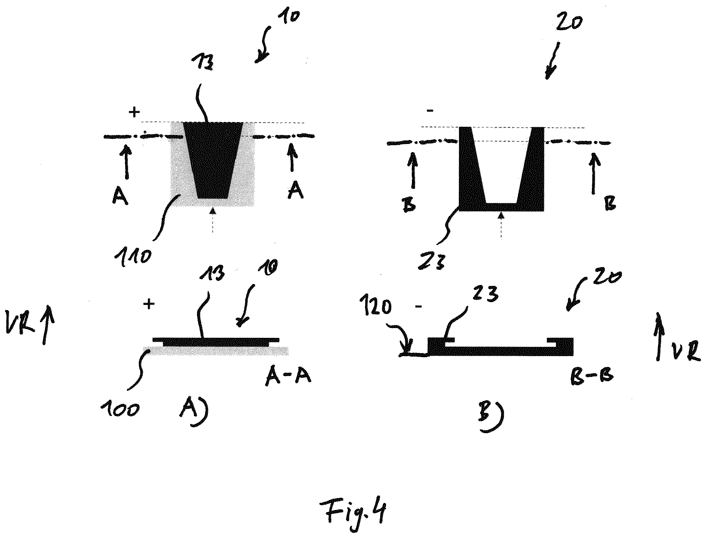

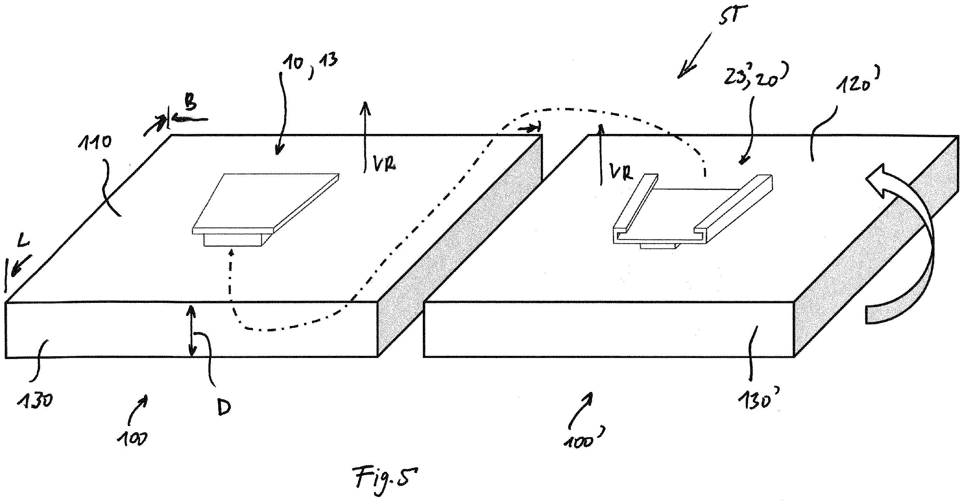

Fig. 4 zeigt Ausschnitte eines zweiten bevorzugten Ausführungsbeispiels einer erfindungsgemäßen Pouchzelle 100 (vgl. auch Fig. 5).

In Fig. 4 ist der Plus-Kontaktbereich 10 als kombiniertes elektrisch-mechanisches Plus-Steckverbindungselement ausgebildet. Der Minus-Kontaktbereich 20 ist als kombiniertes elektrisch-mechanisches Minus-Steckverbindungselement ausgebildet. Wie der Fig. 4 in Zusammenschau entnommen werden kann, sind die Steckverbindungselemente 13, 23 komplementären Typs und bilden hier eine Steckverbindung im Sinne einer trapezförmigen oder keilförmigen Verbindung nach Art einer Schlittenführung.

Fig. 4A zeigt den Plus-Kontaktbereich 10 im Detail, wobei im oberen Teil der Fig. 4A eine Draufsicht und im unteren Teil der Fig. 4A ein Schnitt gemäß der Schnittlinie A-A dargestellt ist. Gut zu erkennen ist, dass die Zelloberseite 110 im Wesentlichen flach ist und das Plus-Steckverbindungselement 13 in senkrechter Richtung VR über die flache Zelloberseite 110 absteht.

In Fig. B wiederum ist gut zu erkennen, dass auch das Minus-Steckverbindungselement 23 in senkrechter Richtung VR über eine hier angedeutete flache Zellunterseite 120 hinausragt. An dieser Stelle sei nochmals erwähnt, dass mehrere Möglichkeiten einer Ausgestaltung der Verbindungselemente als Steckverbindungselemente denkbar sind, wobei Fig. 4 jedenfalls eine bevorzugte Ausgestaltung darstellt.

Fig. 5 zeigt zwei Pouchzellen 100, 100' gemäß dem zweiten bevorzugten Ausführungsbeispiel der Fig. 4 vor dem Zusammenstecken. Es handelt sich also bei den Pouchzellen 100, 100' um zwei Pouchzellen, die in einem hier nicht gezeigten Stack benachbart wären.

Die beiden Pouchzellen 100, 100' der Fig. 5 sind identisch ausgebildet, wobei bei der Pouchzelle 100 auf der linken Seite der Fig. 5 die Zelloberseite 110 oben liegt, wohingegen auf der rechten Seite der Fig. 5 eine Zellunterseite 120' der zweiten Pouchzelle 100' beispielhaft nach oben dargestellt ist.

Wie der Fig. 5 aufgrund der perspektivischen Darstellung gut zu entnehmen ist, sind das Plus-Steckverbindungselement 13 der ersten Pouchzelle 100 und das Minus-Steckverbindungselement 23' der zweiten Pouchzelle 100' zueinander komplementär ausgebildet. Im Zuge eines Zusammensteckens der beiden Pouchzellen 100, 100' - dies ist durch die gestrichelte Linie angedeutet - kommt es zu einem mechanischen Verschließen des Plus-Steckverbindungselements 13 mit dem Minus-Steckverbindungselement 23'. Durch dieses mechanische Verschließen wird gleichzeitig eine elektrische Kontaktierung der beiden Pouchzellen realisiert. Ein Zusammenstecken erfolgt dabei in Steckrichtung ST parallel zur Zelloberseite 110 und zur Zellunterseite 120'.

Wie ebenfalls aus Fig. Ersichtliche ist, ist eine Dicke D der Pouchzelle 100 geringer als die Breite B und die Länge L der Pouchzelle. Im vorliegend dargestellten Ausführungsbeispiel ist die Dicke D geringer als ein Fünftel der Breite B und der Länge L.

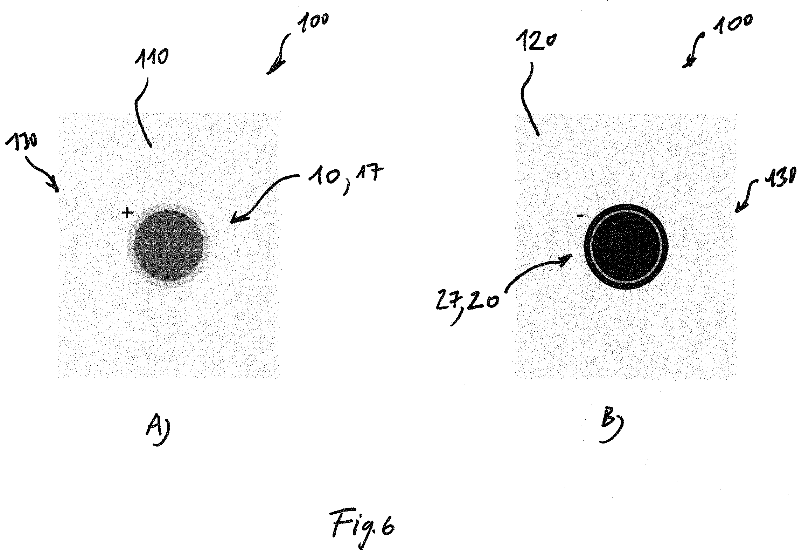

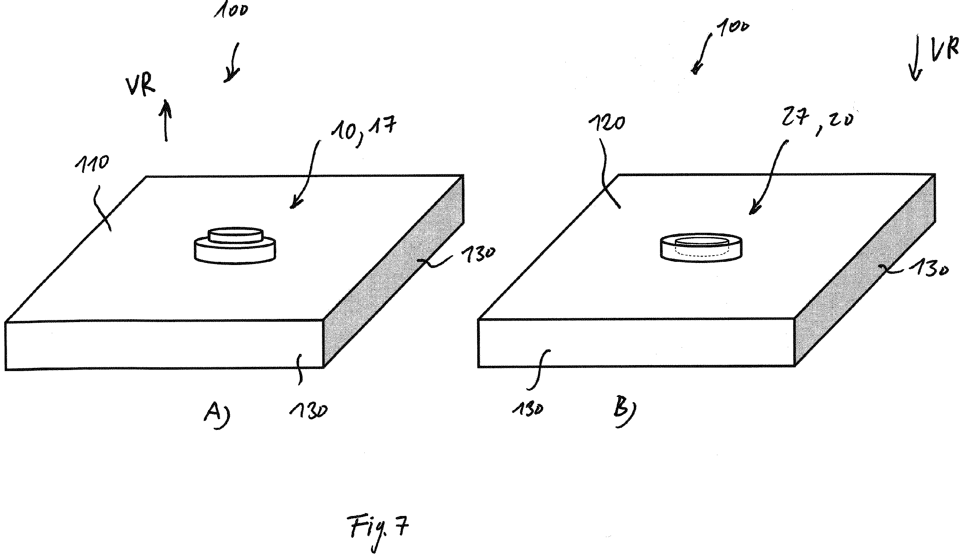

Fig. 6 zeigt nunmehr ein drittes bevorzugtes Ausführungsbeispiel einer erfindungsgemäßen Pouchzelle 100 in Draufsicht (Fig. 6A) sowie in Unteransicht (Fig. 6B). Im Ausführungsbeispiel der Fig. 6 ist der Plus-Kontaktbereich 10 als Plus-Schraubenverbindungselement 17 ausgebildet. Der Minus-Kontaktbereich 20 ist als Minus-Schraubverbindungselement 27 ausgebildet. Das Plus-Schraubenverbindungselement 17 Minus-Schraubverbindungselement 27 sind komplentären Typs, wie aus der perspektivischen Seitenansicht der Fig. 7 ersichtlich wird. Wie aus der Fig. 7A ersichtlich ist, ist das Plus-Schraubverbindungselement 17 als männliches Verbindungselement ausgebildet. Das Minus-Schraubverbindungselement 27 (Fig. 7B) ist als weibliches Schraubverbindungselement ausgebildet. In beiden Ansichten gut zu erkennen ist, dass die Zelloberseite 110 und die Zellunterseite 120 im Wesentlichen flach sind und ein umlaufender Zellrandstreifen 130 frei von jedweden elektrischen Kontaktierelementen ist.

Das Plus-Schraubverbindungselement 17 und das Minus-Schraubverbindungselement 27 sind zueinander komplementären Typs. Mit anderen Worten kann das Plus-Schraubverbindungselement 17 nach Art einer Schraube in das Minus-Schraubverbindungselement 27 (nach Art einer Mutter) eingeschraubt werden. Selbstverständlich gilt dies für verschiedene Zellen gleicher Bauart, da Fig. 7 hier beispielhaft die Oberseite und die Unterseite ein und derselben Pouchzelle 100 zeigt.

Gut zu erkennen in Fig. 7 ist ebenfalls, dass das Plus-Steckverbindungselement 13 in senkrechter Richtung VR über die flache Zelloberseite 110 hinausragt. Das Minus-Schraubverbindungselement 27 ragt in senkrechter Richtung VR über die Zellunterseite 120 hinaus. Außerhalb des Plus-Kontaktbereichs 10 und außerhalb des Minus-Kontaktbereichs 20 ist die Pouchzelle 100 elektrisch isoliert. Dies ist vorteilhafterweise auch bei allen anderen Ausführungsbeispielen eine bevorzugte Weiterbildung.

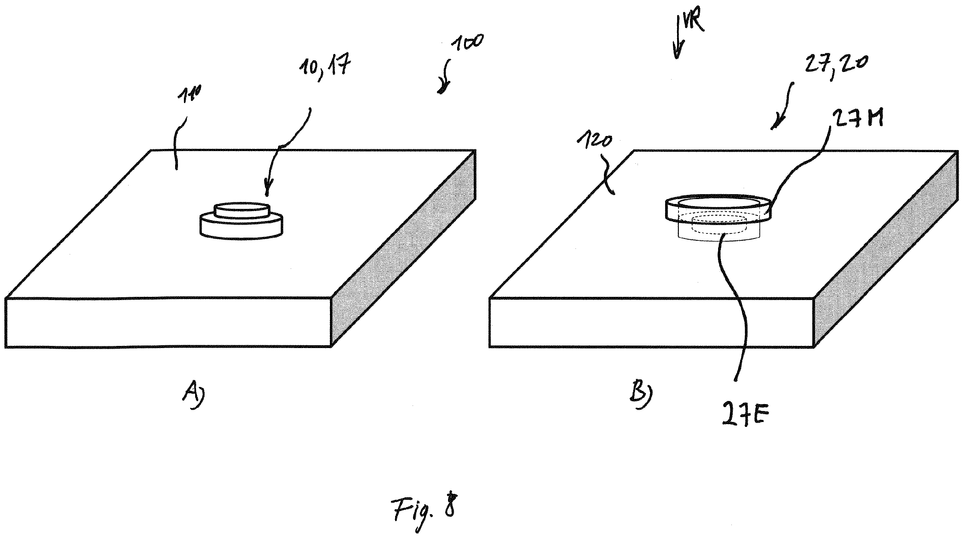

Fig. 8 zeigt schließlich ein viertes bevorzugtes Ausführungsbeispiel einer erfindungsgemäßen Pouchzelle. Die Pouchzelle 100 weist einen Plus-Kontaktbereich 10 auf einer Zelloberseite 110 und einen Minus-Kontaktbereich 20 auf einer gegenüberliegenden Zellunterseite 120 auf. Der Plus-Kontaktbereich 10 ist ausschließlich auf der Zelloberseite 110 und der Minus-Kontaktbereich 20 ist ausschließlich auf der Zellunterseite 120 angeordnet.

Der Plus-Kontaktbereich 10 ist als männliches Plus-Schraubverbindungselement 17 und der Minus-Kontaktbereich 20 als weibliches Minus-Schraubverbindungselement 27 ausgebildet.

Im Gegensatz zu dem mit Bezug auf Fig. 7 beschriebenen Ausführungsbeispiel erstreckt sich das Minus-Schraubverbindungselement 27 lediglich abschnittsweise über die Zellunterseite 120 in senkrechter Richtung VR ab. Wie auch bei dem Plus-Schraubverbindungselement 17 handelt es sich bei dem Minus-Schraubverbindungselement 27 um ein elektrisch-mechanisches Verbindungselement, das heißt die Schraubverbindungselemente 17, 27 ermöglichen sowohl ein elektrisches Kontaktieren als auch ein mechanisches Verbinden von Pouchzellen untereinander.

Im Unterschied zu dem mit Bezug auf Fig. 7 beschriebenen Ausführungsbeispiel ist beim Ausführungsbeispiel der Fig. 8 das Minus-Schraubelement 27 zweiteilig ausgebildet, das heißt es verfügt über einen rein mechanischen Bereich 27M und einen elektrischen Bereich 27E. Somit ist das Minus-Schraubverbindungselement 27 lediglich abschnittsweise elektrisch leitfähig, nämlich im Bereich 27E, sodass ein elektrisches Kontaktieren erst erfolgt, wenn das Plus-Schraubverbindungselement 17 vollständig im Minus-Schraubverbindungselement 27 eingeschraubt ist. Eine elektrische Kontaktierung erfolgt dabei über den elektrischen Bereich 27E. Die in Fig. 8 gezeigte Variante hat den Vorteil einer weiter erhöhten Kurzschlusssicherheit für einen Massenproduktionsprozess von Pouchzellenstacks.

### Bezugszeichenliste

- 10: Plus-Kontaktbereich
- 11: Plus-Verbindungselement
- 13: Plus-Steckverbindungselement
- 15: Plus-Stackanschluss
- 17: Plus-Schraubverbindungselement
- 20: Minus-Kontaktbereich
- 21: Minus-Verbindungselement
- 23: Minus-Steckverbindungselement
- 25: Minus-Stackanschluss
- 27: Minus-Schraubverbindungselement
- 27M: mechanischer Bereich
- 27E: elektrischer Bereich

- 100: Pouchzelle
- 110: Zelloberseite
- 120: Zellunterseite
- 130: Zellenrandstreifen
- 500: Stack
- 510: Gehäuse

- B: Breite
- D: Dicke
- L: Länge
- PR: parallele Richtung
- SR: seitliche Richtung
- ST: Steckrichtung
- VR: senkrechte Richtung

## Patentansprüche

1. Pouchzelle (100) mit einem Plus-Kontaktbereich (10) und einem Minus-Kontaktbereich (20), über die die Pouchzelle (100) elektrisch kontaktiert und so beladen und entladen werden kann, wobei die Pouchzelle (100) flächig ausgebildet ist und eine Zelloberseite (110) sowie eine der Zelloberseite (110) gegenüberliegende Zellunterseite (120) aufweist,
**dadurch gekennzeichnet, dass** der Plus-Kontaktbereich (10) ausschließlich auf der Zelloberseite (110) und der Minus-Kontaktbereich (20) ausschließlich auf der Zellunterseite (120), oder umgekehrt, befindlich ist.

2. Pouchzelle (100) nach Anspruch 1,
**dadurch gekennzeichnet, dass** die Pouchzelle (100) einen umlaufenden Zellrandstreifen (130) aufweist, der frei von elektrischen Kontaktfahnen oder frei von jedweden elektrischen Kontaktierelementen ist.

3. Pouchzelle (100) nach Anspruch 1 oder 2,
**dadurch gekennzeichnet, dass** der Plus-Kontaktbereich (10) als elektrisches und/oder mechanisches Plus-Verbindungselement (11) und der Minus-Kontaktbereich (20) als elektrisches und/oder mechanisches Minus-Verbindungselement (21) ausgebildet ist.

4. Pouchzelle (100) nach Anspruch 3,
**dadurch gekennzeichnet, dass** das Plus-Verbindungselement (11) und das Minus-Verbindungselement (21) jeweils flach und zum Kontaktieren mittels Verpressens oder Verschweißens ausgebildet sind.

5. Pouchzelle (100) nach Anspruch 3,
**dadurch gekennzeichnet, dass** das Plus-Verbindungselement (11) und das Minus-Verbindungselement (21) jeweils als Steckverbindungselement (13, 23), vorzugsweise komplementären Typs, ausgebildet sind.

6. Pouchzelle (100) nach Anspruch 5,
**dadurch gekennzeichnet, dass** eine Steckrichtung (ST) der Steckverbindungselemente (13, 23) parallel zur Zelloberseite (110) und zur Zellunterseite (120) orientiert ist.

7. Pouchzelle (100) nach Anspruch 3,
**dadurch gekennzeichnet, dass** das Plus-Verbindungselement (11) und das Minus-Verbindungselement (21) jeweils als Schraubverbindungselemente (17, 27), vorzugsweise komplementären Typs, ausgebildet sind.

8. Pouchzelle (100) nach einem der vorangehenden Ansprüche,
**dadurch gekennzeichnet, dass** die Schraubverbindungselemente (17, 27) lediglich abschnittweise elektrisch leitfähig sind, derart, dass ein elektrisches Kontaktieren erst nach einem mechanischen Kontaktieren erfolgt.

9. Pouchzelle (100) nach einem der vorangehenden Ansprüche,
**dadurch gekennzeichnet, dass** die Pochzelle (100) außerhalb des Plus-Kontaktbereichs (10) und des Minus-Kontaktbereichs (20) elektrisch isoliert ist.

10. Pouchzelle (100) nach einem der vorangehenden Ansprüche,
**dadurch gekennzeichnet, dass** die Zelloberseite (110) und die Zellunterseite (120) im Wesentlichen flach sind.

11. Pouchzelle (100) nach einem der vorangehenden Ansprüche,
**dadurch gekennzeichnet, dass** sich die Verbindungselemente (11, 21; 13, 23; 17, 27) jeweils senkrecht (VR) zur flachen Zelloberseite (110) und/oder Zellunterseite (120) erstrecken.

12. Pouchzelle (100) nach einem der vorangehenden Ansprüche,
**dadurch gekennzeichnet, dass** die Verbindungselemente (11, 21; 13, 23; 17, 27) über die flache Zelloberseite (110) bzw. die flache Zellunterseite (120) hinausragen.

13. Pouchzelle (100) nach einem der vorangehenden Ansprüche,
**dadurch gekennzeichnet, dass** der Plus-Kontaktbereich (10) und der Minus-Kontaktbereich (20) über innerhalb der Pouchzelle (100) verlaufende Schleifen oder Leitungen aus der Pouchzelle (100) herausgeführt sind.

14. Stack (500) aufweisend eine Mehrzahl von Pouchzellen (100) nach einem der vorangehenden Ansprüche, wobei die Pouchzellen (100) über ihre jeweiligen Verbindungselemente elektrisch miteinander kontaktiert sind.

15. Verwendung eines Stacks (500) nach Anspruch 14 zur Versorgung einer elektrischen Handwerkzeugmaschine.
